# FASCICULE DE BREVET EUROPEEN

(11) **EP 3 556 061 B1**
(45) Date de publication et mention de la délivrance du brevet: **29.11.2023**
(21) Numéro de dépôt: 17832519.7
(22) Date de dépôt: 19.12.2017
(51) Int. Cl.: H04L 51/02, H04L 51/046

(54) **PROCÉDÉ ET DISPOSITIF D'ALERTE DE LA SURVENANCE D'UN ÉVÉNEMENT**
VERFAHREN UND VORRICHTUNG ZUR BEREITSTELLUNG EINES ALARMS BEI AUFTRETEN EINES EREIGNISSES
METHOD AND DEVICE FOR PROVIDING AN ALERT ON THE OCCURRENCE OF AN EVENT

(30) Priorité: 19.12.2016 FR 1662718
(43) Date de publication de la demande: 23.10.2019
(73) Titulaire: Orange, 92130 Issy-les-Moulineaux (FR)
(72) Inventeur: SCHNEITER, Christian, 92326 Châtillon Cedex (FR)
(86) Numéro de dépôt international: PCT/FR2017/053696
(87) Numéro de publication internationale: WO 2018/115717

(56) Documents cités:
- US-B1- 9 043 407
- US-B1- 9 386 113

## Description

La présente invention concerne le domaine des robots de dialogues, notamment dans le cadre de la gestion d'événements.

Un robot de dialogue est un module conversationnel (programmé ou basé sur une intelligence artificielle) permettant d'interagir avec un utilisateur réel en langage naturel. Cette interaction peut être de tout type (ex. par voix, par texte, par vidéo, etc.).

On désigne par langage naturel le langage parlé par les hommes (par opposition au langage informatique).

Les robots de dialogue (ou « *chatbot* » en anglais) existants permettent le plus souvent à un utilisateur de poser une question. Le robot tente alors d'y répondre ou demande à l'utilisateur de préciser la question ou de confirmer la compréhension dudit robot.

Un robot de dialogue est habituellement opéré dans un serveur, et il existe un canal de communication entre le robot et l'utilisateur (par exemple, une application de messagerie texte, comme Facebook Messenger ou Skype, ou un canal de communication par SMS) qui permet à un utilisateur d'interroger le robot.

Par exemple, un robot conversationnel peut être utilisé pour permettre à un utilisateur de :
- commander un billet de train (ex. « Bonjour, je souhaite réserver une place dans le prochain Paris-Marseille ») ;
- consulter la météo (ex. « Bonjour, dois-je prendre mon parapluie aujourd'hui ? ») ;
- connaître les films à l'affiche au cinéma (ex. « Quel est le film à l'affiche avec un « proton pack » et des fantômes ? »).

Le document US9043407 décrit une interface d'utilisateur d'une plateforme du type "communication-enabled business process" (CEBP), cette interface est mise en oeuvre par un robot de dialogue permettant aux utilisateurs d'interagir et de contrôler la plateforme CEBP. La plateforme peut identifier les utilisateurs devant recevoir une notification et leur adresser la notification. Le document US9386113 divulgue un système offrant la possibilité d'abonnement d'un utilisateur à une pluralité de services en utilisant un message en langage naturel. Lorsqu'un événement associé à la demande de l'utilisateur se produit, une notification push est activée et envoyée vers l'utilisateur qui l'informe de la survenance de l'événement.

Néanmoins, les échanges entre les robots et les utilisateurs sont souvent instantanés :
- si un utilisateur revient discuter avec le robot plusieurs fois de suite, le robot n'aura aucune connaissance des échanges précédents ;
- si un utilisateur confie un désir / un souhait au robot, le robot ne peut traiter l'information (le désir / le souhait étant un concept futur).

Il y a ainsi un besoin pour permettre au robot conversationnel de réagir, hors présence de l'utilisateur, à un souhait exprimé antérieurement par l'utilisateur.

La présente invention vient améliorer la situation.

Selon un premier aspect, il est proposé un procédé d'alerte de la survenance d'un événement selon la revendication 1.

Ainsi, l'événement faisant l'objet de la requête utilisateur peut être asynchrone par rapport à cette requête. Le moteur sémantique ne réalise donc pas une simple interaction immédiate avec l'utilisateur (i.e. une réponse instantanée de type « Question : Quel temps fait-il ? » « Réponse : La température extérieure est de 20°C »).

Au contraire, le procédé proposé permet de désynchroniser la question de l'utilisateur (ou l'expression de son souhait) et la réponse du robot de dialogue (ex. « Question : Pouvez-vous me prévenir lorsque le film de la soirée sur la chaine 25 commence ? », « Réponse (asynchrone) : Le film *'Les visiteurs 3'* commence dans 5 minutes »).

Bien entendu, il est peu envisageable de prévoir, au sein du robot de dialogue, l'ensemble des événements qui peuvent être demandés par l'utilisateur. La complexité de codage d'un tel robot de dialogue serait trop importante. Ainsi, dans un ou plusieurs modes de réalisation, en fonction de l'événement demandé par l'utilisateur, le robot de dialogue peut déléguer à un autre serveur (appelé serveur d'événements) la surveillance de l'événement :
- un serveur de télévision pour des événements liés à des programmes télévisuels ;
- un serveur de bourse pour des événements liés à des cours boursiers ;
- un serveur d'alertes météo pour des événements liés à des événements météorologiques majeurs (ex. tempêtes, froids extrêmes, tsunamis, etc.) ;
- etc.

Dès lors, en fonction de l'événement, un serveur d'événements spécifique pourra être identifié.

Pour la détermination du serveur d'événements, il est possible de prévoir une base de données préétablie (par exemple, au sein du robot de dialogue) comportant une association entre les événements (ou les types d'événements) et le serveur d'événements.

Par ailleurs, dans un mode de réalisation particulier du procédé proposé, le deuxième message peut être un message en langage naturel.

En effet, l'envoi dudit deuxième message en langage naturel permet une interaction aisée avec l'utilisateur.

Dans un mode de réalisation particulier du procédé proposé, la requête utilisateur peut être reçue via un canal de communication textuelle.

En effet, l'interprétation des messages textuels en langage naturel est éprouvée et permet une implémentation aisée.

En outre, dans un mode de réalisation particulier du procédé proposé, le moteur sémantique peut être un moteur utilisant une intelligence artificielle.

Ainsi, il est possible de réaliser un apprentissage spécifique dudit moteur sémantique pour lui permettre d'identifier spécifiquement une liste d'événements prédéfinis. Le taux de reconnaissance est donc amélioré.

De manière alternative ou en complément, la détermination du serveur d'événements peut comprendre, dans un ou plusieurs modes de réalisation :
- l'envoi d'un troisième message à un serveur d'interrogation, le troisième message comprenant l'événement ou un type de l'événement.
- la réception d'un quatrième message en provenance du serveur d'interrogation, le quatrième message comprenant une information relative au serveur d'événements.

Ainsi, il est possible de déléguer à un serveur tiers (ou serveur d'interrogation) la fonction d'identification du serveur d'événements à utiliser en fonction de l'événement demandé. Dès lors, la complexité d'implémentation du robot de dialogue s'en trouve réduite.

Selon un deuxième aspect, il est proposé un dispositif d'alerte de la survenance d'un événement selon la revendication 6.

Un programme informatique, mettant en oeuvre tout ou partie du procédé décrit ci-avant, installé sur un équipement préexistant, est en lui-même avantageux.

Ainsi, selon un autre aspect, il est proposé un programme d'ordinateur, chargeable dans une mémoire associée à un processeur, et comprenant des portions de code pour la mise en oeuvre du procédé proposé lors de l'exécution dudit programme par le processeur, ainsi qu'un ensemble de données représentant, par exemple par voie de compression ou d'encodage, ledit programme d'ordinateur.

Ce programme peut utiliser n'importe quel langage de programmation (par exemple, un langage-objet ou autre), et être sous la forme d'un code source interprétable, d'un code partiellement compilé ou d'un code totalement compilé.

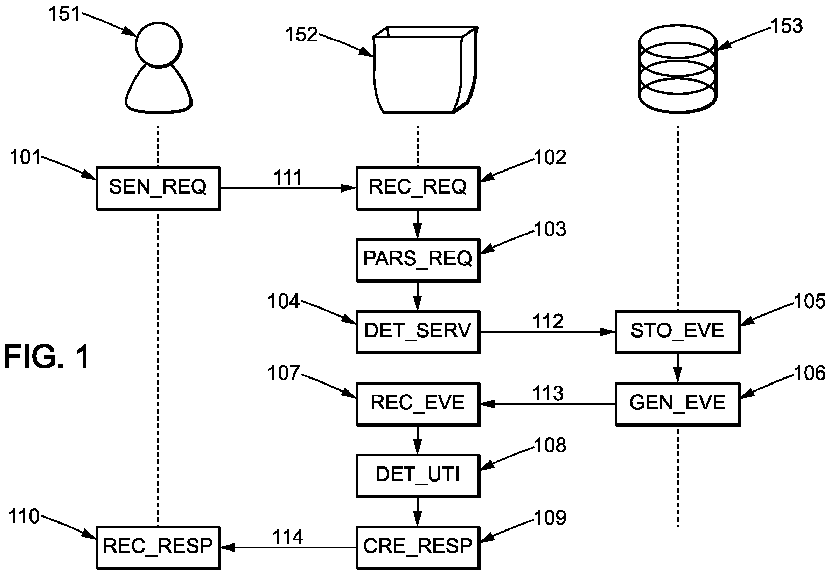

Une partie de la figure 1 décrite en détail ci-après peut former l'organigramme de l'algorithme général d'un tel programme informatique.

Un autre aspect concerne un support de stockage non-transitoire d'un programme exécutable par ordinateur, comprenant un ensemble de données représentant un ou plusieurs programmes, lesdits un ou plusieurs programmes comprenant des instructions pour, lors de l'exécution desdits un ou plusieurs programmes par un ordinateur comprenant une unité de traitement couplée de manière opérationnelle à des moyens mémoire et à un module d'interface entrées/sorties, conduire l'ordinateur à alerter de la survenance d'un événement selon le procédé proposé.

D'autres particularités et avantages de la présente invention apparaîtront dans la description ci-après d'exemples de réalisation non limitatifs, en référence aux dessins annexés, dans lesquels :
- la figure 1 illustre un ordinogramme général dans un mode de réalisation particulier;
- la figure 2 illustre un exemple de dispositif dans un mode de réalisation particulier pour la mise en oeuvre des procédés décrits dans les présentes.

La figure 1 illustre un ordinogramme général dans un mode de réalisation particulier.

Lorsqu'un utilisateur 151 souhaite être averti/alerté de la survenance d'un événement, il peut envoyer (101) sa requête 111 à un robot de dialogue 152. Cette requête est alors exprimée en langage naturel.

Cette requête peut être transmise textuellement (via une application de messagerie : email, SMS, FaceBook Messenger, Twitter, etc.), oralement (ex. par téléphone) ou encore visuellement (ex. par Skype).

Sur réception (102) de la requête 111, le robot de dialogue 152 l'interprète (103) à l'aide d'une analyse syntaxique et/ou sémantique afin d'identifier la commande d'abonnement à un événement.

Une telle interprétation peut faire appel à des techniques de type « NLU » (pour « *Natural Language Understanding* » en anglais). Le robot de dialogue peut notamment s'appuyer sur un moteur d'intelligence artificiel, le moteur ayant préalablement été entrainé pour la reconnaissance spécifique d'une liste d'événements prédéfinis, par exemple.

Les événements visés par la requête de l'utilisateur peuvent être de manière non-limitative :
- une demande d'alerte lorsque le cours de bourse d'un titre est inférieur ou supérieur à un seuil prédéfini ;
- une demande d'alerte lorsqu'un fichier sur un serveur est modifié ;
- une demande d'alerte lorsqu'une émission TV est sur le point de débuter ;
- une demande d'alerte lorsqu'un produit sur un site de vente est de nouveau disponible ;
- une demande d'alerte lorsque la température extérieure est inférieure ou supérieure à un seuil prédéfini ;
- une demande d'alerte lorsque un utilisateur est en ligne / disponible ;
- une demande d'alerte lorsque un virement bancaire a été reçu ;
- etc.

Bien entendu, si le robot de dialogue a un doute concernant la commande d'abonnement ou concernant l'événement, il peut demander à l'utilisateur de préciser sa requête (non représentée).

Une fois l'événement identifié, il est possible de déterminer le serveur d'événements qui pourra traiter cette requête d'abonnement (104) :
(i) si le robot de dialogue possède une base de données permettant de trouver le serveur d'événements correspondant à l'événement (ou au type d'événement), cette détermination peut s'effectuer directement à l'aide de cette base de données ;
(ii) si le robot de dialogue ne possède pas une telle base ou si aucune correspondance n'existe dans cette base, le robot de dialogue peut envoyer un message à un serveur tiers (ou serveur d'interrogation) afin qu'il identifie, pour lui, un serveur d'événements susceptible de traiter la requête d'abonnement.

Une fois le serveur d'événements 153 identifié, il est possible d'envoyer un message 112 informant ledit serveur d'événements 153 de la demande utilisateur. Le serveur d'événements stocke alors cette demande (105).

Lorsque l'événement survient, le serveur d'événements 153 peut alors en être averti (ex. base de données temps réel, base de données temps comportant des fonctions de type « trigger », mécanisme dit de « push »). Il est également possible que le serveur d'événements 153 vérifie régulièrement l'état de l'événement demandé (ex. survenance ou non-survenance). Le serveur d'événements 153 peut alors construire un message 113 (106) afin d'informer le robot de dialogue de la survenance.

Lors de la réception du message 113 (107), le robot de dialogue peut effectuer un certain nombre d'actions (ex. mis à jour d'une base de données, mise à jour d'un système de facturation, insertion d'une entrée dans un journal d'historique). Ces actions peuvent être préprogrammées ou peuvent dépendre de l'événement. Il est aussi possible de déterminer (108) à quel(s) utilisateur(s) correspond l'événement associé au message 113 (i.e. les/l'utilisateur(s) ayant demandé d'être averti de la survenance de l'événement) : cette information peut être contenue dans le message 113 ou cette information peut avoir préalablement été stockée par le robot de dialogue dans une base de données locale (ex. « l'utilisateur X a demandé la surveillance de l'événement Y »).

Une fois l'utilisateur identifié, il est possible de créer (109) un message 114, en langage naturel par exemple, afin d'informer (110) l'utilisateur de la survenance de l'événement.

Il est proposé selon un autre aspect un procédé de désabonnement, dont un ou plusieurs modes de réalisation peuvent être décrits de manière similaire au procédé d'abonnement décrit en relation de la figure 1. Dès lors les considérations précédentes s'appliquent également au procédé de désabonnement proposé.

Lorsqu'un utilisateur 151 souhaite se désabonner d'un événement auquel il est abonné, il peut envoyer sa requête à un robot de dialogue 152. Cette requête peut être alors exprimée en langage naturel.

Sur réception de la requête de désabonnement, le robot de dialogue 152 l'interprète à l'aide d'une analyse syntaxique et/ou sémantique afin d'identifier la commande de désabonnement.

Bien entendu, si le robot de dialogue a un doute concernant la commande de désabonnement ou concernant l'événement visé par ce désabonnement, il peut demander à l'utilisateur de préciser sa requête.

Une fois l'événement identifié, il est possible de déterminer le serveur d'événements qui pourra traiter cette requête de désabonnement :
(i) si le robot de dialogue possède une base de données permettant de trouver le serveur d'événements correspondant à l'événement (ou au type d'événement), cette détermination peut s'effectuer directement à l'aide de cette base de données ;
(ii) si le robot de dialogue possède une base de données stockant le serveur identifié lors de la phase d'abonnement, cette détermination peut s'effectuer directement à l'aide de cette base de données ;
(iii) si le robot de dialogue ne possède pas de telles bases ou si aucune correspondance n'existe dans cette base, le robot de dialogue peut envoyer un message à un serveur tiers (ou serveur d'interrogation) afin qu'il identifie, pour lui, un serveur d'événements susceptible de traiter la requête de désabonnement.

Une fois le serveur d'événements 153 identifié, il est possible d'envoyer un message informant ledit serveur d'événements 153 de la demande utilisateur. Le serveur d'événements :
- supprime l'information selon laquelle l'utilisateur a demandé à être averti de la survenance de l'événement, ou
- annule la demande de l'utilisateur d'être averti de la survenance de l'événement.

Bien entendu, si la demande de désabonnement ne correspond pas à un événement pour lequel l'utilisateur s'est abonné, le serveur d'événements ou le robot peut ignorer la demande de l'utilisateur ou l'informer de ce fait.

La demande de désabonnement de l'utilisateur peut être une demande de désabonnement temporaire (ex. « Ne me préviens pas de la vente de l'objet X durant les 3 prochaines heures »). Ainsi, le robot peut procéder au procédé de désabonnement décrit précédemment puis, une fois la fin de la période temporaire atteinte, procéder au réabonnement auprès du serveur d'événements, ou simplement filtrer les messages du serveur d'événements afin de ne pas transmettre les messages 114 durant la période temporaire.

La demande de désabonnement peut être générique (ex. « Désabonne-moi des événements relatifs à la télévision »). Sous cette hypothèse, le robot de discussion 152 peut identifier plusieurs événements et/ou plusieurs serveurs pour lesquels un désabonnement doit être effectué.

Bien entendu, la demande de désabonnement peut être plus complexe (ex. générique et temporaire).

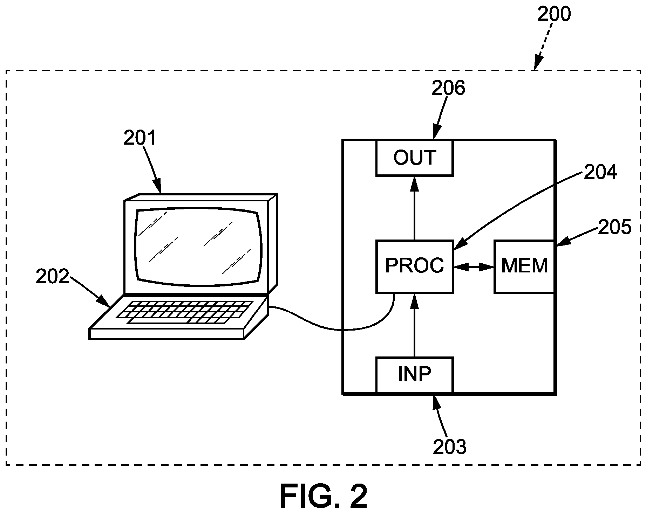

La figure 2 représente un exemple de dispositif dans un mode de réalisation particulier pour la mise en oeuvre des procédés décrits dans les présentes.

Dans ce mode de réalisation, le dispositif 200, comprend une mémoire 205 pour stocker des instructions permettant la mise en oeuvre du procédé proposé, et des données temporaires pour réaliser les différents modes de réalisation du procédé proposé tel que décrits précédemment.

Le dispositif comporte en outre un circuit de commande 204. Ce circuit de commande peut être, par exemple :
- un processeur apte à interpréter des instructions sous la forme de programme informatique, ou
- une carte électronique configurée par description dans le silicium du procédé proposé, ou encore
- une puce électronique programmable comme une puce FPGA (pour « Field-Programmable Gate Array » en anglais).

Le dispositif comporte une interface d'entrée 203 pour la réception de la requête utilisateur (notamment), et une interface de sortie 206 pour la fourniture du message informant l'utilisateur de la survenance de l'événement. Enfin, le dispositif peut comporter, pour permettre une interaction aisée avec un utilisateur, un écran 201 et un clavier 202. Bien entendu, le clavier est facultatif, notamment dans le cadre d'un dispositif ayant la forme d'un serveur, par exemple.

En fonction du mode de réalisation, le dispositif 200 peut être un ordinateur, un réseau d'ordinateurs, un composant électronique, ou un autre appareil comportant un processeur couplé de manière opérationnelle à une mémoire, ainsi que, selon le mode de réalisation choisi, une unité de stockage de données, et d'autres éléments matériels associés comme une interface de réseau et un lecteur de support pour lire un support de stockage amovible et écrire sur un tel support (non représentés sur la figure). Le support de stockage amovible peut être, par exemple, un disque compact (CD), un disque vidéo/polyvalent numérique (DVD), un disque flash, une clé USB, etc. En fonction du mode de réalisation, la mémoire, l'unité de stockage de données ou le support de stockage amovible contient des instructions qui, lorsqu'elles sont exécutées par le circuit de commande 204, amènent ce circuit de commande 204 à effectuer ou contrôler les parties interface d'entrée 203, interface de sortie 206, stockage de données 205 et/ou traitement de données des exemples de mise en oeuvre du procédé proposé décrits dans les présentes. Le circuit de commande 204 peut être un composant implémentant un processeur ou une unité de calcul pour l'alerte de la survenance d'un événement selon le procédé proposé et le contrôle des unités 203, 205 et 206 du dispositif 200.

En outre, le dispositif 200 peut être mis en oeuvre sous forme logicielle, auquel cas il prend la forme d'un programme exécutable par un processeur, ou sous forme matérielle (ou « hardware »), comme un circuit intégré spécifique application (ASIC), un système sur puce (SOC), ou sous forme d'une combinaison d'éléments matériels et logiciels, comme par exemple un programme logiciel destiné à être chargé et exécuté sur un composant de type FPGA (Field Programmable Gate Array). Les *SOC* (*System On Chip*) ou système sur puce sont des systèmes embarqués qui intègrent tous les composants d'un système électronique dans une puce unique. Un *ASIC* (*Application Spécifie Integrated Circuit*) est un circuit électronique spécialisé qui regroupe des fonctionnalités sur mesure pour une application donnée. Les ASIC sont généralement configurés lors de leur fabrication et ne peuvent être que simulés par l'utilisateur. Les circuits logiques programmables de type *FPGA* (*Field-Programmable Gate Array*) sont des circuits électroniques reconfigurables par l'utilisateur.

Le dispositif 200 peut également utiliser des architectures hybrides, comme par exemple des architectures basées sur un CPU+FPGA, un GPU (*Graphies Processing Unit*) ou un MPPA (*Multi-Purpose Processor Array*)*.*

Par ailleurs, le schéma fonctionnel présenté sur la figure 1 est un exemple typique d'un programme dont certaines instructions peuvent être réalisées auprès du dispositif d'alertes décrit. À ce titre, la figure 1 peut correspondre à l'organigramme de l'algorithme général d'un programme informatique dans un mode de réalisation particulier.

Bien entendu, la présente invention ne se limite pas aux formes de réalisation décrites ci-avant à titre d'exemples ; elle s'étend à d'autres variantes.

D'autres réalisations sont possibles.

En fonction du mode de réalisation choisi, certains actes, actions, évènements ou fonctions de chacune des méthodes décrites dans le présent document peuvent être effectués ou se produire selon un ordre différent de celui dans lequel ils ont été décrits, ou peuvent être ajoutés, fusionnés ou bien ne pas être effectués ou ne pas se produire, selon le cas. En outre, dans certains modes de réalisation, certains actes, actions ou évènements sont effectués ou se produisent concurremment et non pas successivement.

Bien que décrits à travers un certain nombre d'exemples de réalisation détaillés, le procédé d'alerte proposé et l'équipement pour la mise en oeuvre du procédé comprennent différentes variantes, modifications et perfectionnements qui apparaîtront de façon évidente à l'homme de l'art, étant entendu que ces différentes variantes, modifications et perfectionnements font partie de la portée de l'invention, telle que définie par les revendications qui suivent. De plus, différents aspects et caractéristiques décrits ci-dessus peuvent être mis en oeuvre ensemble, ou séparément, ou bien substitués les uns aux autres, et l'ensemble des différentes combinaisons et sous combinaisons des aspects et caractéristiques font partie de la portée de l'invention. En outre, il se peut que certains systèmes et équipements décrits ci-dessus n'incorporent pas la totalité des modules et fonctions décrits pour les modes de réalisation préférés.

## Revendications

1. Procédé d'alerte de la survenance d'un événement, mis en oeuvre par un dispositif d'alerte de la survenance d'un événement,
le procédé comprenant :
- réception (102), en provenance d'un utilisateur, d'une requête utilisateur (111) contenant une demande d'abonnement à la survenance d'un événement ;
- interprétation (103) de la requête utilisateur (111) à l'aide d'un moteur sémantique et détermination d'une demande d'abonnement à la survenance d'un événement contenu dans la requête ;
- détermination (104) en fonction de l'événement, d'un serveur d'événements (153) pouvant traiter ladite demande d'abonnement ;
- envoi au serveur d'événements (153) d'une requête d'abonnement (112) à la surveillance de la survenance de l'événement ;
- réception (107), en provenance du serveur d'événements (153), d'un premier message (113) associé à une survenance de l'événement ;
- envoi (109) à l'utilisateur, d'un deuxième message (114) informant de la survenance de l'événement.

2. Procédé selon la revendication 1, dans lequel le deuxième message (114) est un message en langage naturel.

3. Procédé selon l'une des revendications précédentes, dans lequel la requête utilisateur (111) est reçue via un canal de communication textuelle.

4. Procédé selon l'une des revendications précédentes, dans lequel le moteur sémantique est un moteur utilisant une intelligence artificielle.

5. Procédé selon l'une des revendications précédentes, dans lequel la détermination (104) du serveur d'événements comprend :
- l'envoi d'un troisième message à un serveur d'interrogation, le troisième message comprenant l'événement.
- la réception d'un quatrième message en provenance du serveur d'interrogation, le quatrième message comprenant une information relative au serveur d'événements.

6. Dispositif (200) d'alerte de la survenance d'un événement, le dispositif comprenant :
- une première interface (203) configurée pour une réception, en provenance d'un utilisateur, d'une requête utilisateur contenant une demande d'abonnement à la survenance d'un événement ;
- un circuit (204) implémentant un moteur sémantique pour l'interprétation de la requête utilisateur, le moteur sémantique étant apte à déterminer une demande d'abonnement à la survenance d'un événement contenu dans la requête ;
- un circuit (204) configuré pour la détermination en fonction de l'événement, d'un serveur d'événements pouvant traiter ladite demande d'abonnement ;
- une deuxième interface (206) configurée pour l'envoi au serveur d'événements d'une requête d'abonnement à la surveillance de la survenance de l'événement ;
- une troisième interface (203) configurée pour la réception, en provenance du serveur d'événements, d'un premier message associé à une survenance de l'événement ;
- une quatrième interface (206) configurée pour l'envoi à l'utilisateur, d'un deuxième message informant l'utilisateur de la survenance de l'événement.

7. Programme d'ordinateur, chargeable dans une mémoire associée à un processeur, et comprenant des portions de code pour la mise en oeuvre d'un procédé selon l'une quelconque des revendications 1 à 5 lors de l'exécution dudit programme par le processeur.

8. Ensemble de données représentant, par exemple par voie de compression ou d'encodage, un programme d'ordinateur selon la revendication 7.

9. Support de stockage non-transitoire d'un programme exécutable par ordinateur, comprenant un ensemble de données représentant un ou plusieurs programmes, lesdits un ou plusieurs programmes comprenant des instructions pour, lors de l'exécution desdits un ou plusieurs programmes par un ordinateur comprenant une unité de traitement couplée de manière opérationnelle à des moyens mémoire et à un module d'interface entrées/sorties, conduire l'ordinateur à alerter de la survenance d'un événement selon le procédé de l'une quelconque des revendications 1 à 5.

## Patentansprüche

1. Verfahren zur Bereitstellung eines Alarms bei Auftreten eines Ereignisses, das durch eine Vorrichtung zur Bereitstellung eines Alarms bei Auftreten eines Ereignisses durchgeführt wird,
wobei das Verfahren umfasst:
- Empfangen (102) einer Benutzeranforderung (111), die eine Anfrage für ein Abonnement bei Auftreten eines Ereignisses enthält, von einem Benutzer;
- Interpretieren (103) der Benutzeranforderung (111) mithilfe einer semantischen Suchmaschine und Ermitteln einer Anfrage für ein Abonnement bei Auftreten eines Ereignisses, die in der Anforderung enthalten ist;
- Ermitteln (104) eines Ereignisservers (153), der die Anfrage für ein Abonnement bearbeiten kann, in Abhängigkeit von dem Ereignis;
- Senden einer Anforderung für eine Abonnementanforderung (112) zur Überwachung des Auftretens des Ereignisses an den Ereignisserver (153);
- Empfangen (107) einer ersten Nachricht (113) in Zusammenhang mit einem Auftreten des Ereignisses vom Ereignisserver (153);
- Senden (109) einer zweiten Nachricht (114), die über das Auftreten des Ereignisses informiert, an den Benutzer.

2. Verfahren nach Anspruch 1, wobei die zweite Nachricht (114) eine Nachricht in natürlicher Sprache ist.

3. Verfahren nach einem der vorhergehenden Ansprüche, wobei die Benutzeranforderung (111) über einen Text-Kommunikationskanal empfangen wird.

4. Verfahren nach einem der vorhergehenden Ansprüche, wobei die semantische Suchmaschine eine Maschine ist, die eine künstliche Intelligenz nutzt.

5. Verfahren nach einem der vorhergehenden Ansprüche, wobei das Ermitteln (104) des Ereignisservers umfasst:
- Senden einer dritten Nachricht an einen Abfrageserver, wobei die dritte Nachricht das Ereignis umfasst,
- Empfangen einer vierten Nachricht vom Abfrageserver, wobei die vierte Nachricht eine Information über den Ereignisserver umfasst.

6. Vorrichtung (200) zur Bereitstellung eines Alarms bei Auftreten eines Ereignisses, wobei die Vorrichtung umfasst:
- eine erste Schnittstelle (203), die für ein Empfangen einer Benutzeranforderung von einem Benutzer, die eine Anfrage für ein Abonnement bei Auftreten eines Ereignisses enthält, konfiguriert ist;
- eine Schaltung (204), die eine semantische Suchmaschine zur Interpretation der Benutzeranforderung implementiert, wobei die semantische Suchmaschine dazu fähig ist, eine Anfrage für ein Abonnement bei Auftreten eines in der Anforderung enthaltenen Ereignisses zu ermitteln;
- eine Schaltung (204), die zum Ermitteln eines Ereignisservers, der die Abonnementanfrage bearbeiten kann, in Abhängigkeit von dem Ereignis konfiguriert ist;
- eine zweite Schnittstelle (206), die zum Senden einer Anfrage für ein Abonnement zur Überwachung des Auftretens des Ereignisses an den Ereignisserver konfiguriert ist;
- eine dritte Schnittstelle (203), die zum Empfangen einer ersten Nachricht vom Ereignisserver in Zusammenhang mit dem Auftreten des Ereignisses konfiguriert ist;
- eine vierte Schnittstelle (206), die zum Senden einer zweiten Nachricht, die den Benutzer über das Auftreten des Ereignisses informiert, an den Benutzer konfiguriert ist.

7. Computerprogramm, das in einen zu einem Prozessor gehörenden Speicher ladbar ist und Codeteile zur Durchführung eines Verfahrens nach einem der Ansprüche 1 bis 5 bei Ausführung des Programms durch den Prozessor umfasst.

8. Gesamtheit von Daten, die beispielswiese durch Komprimierung oder Codierung ein Computerprogramm nach Anspruch 7 repräsentieren.

9. Nichttransitorisches Speichermedium eines durch einen Computer ausführbaren Programms, das eine Gesamtheit von Daten umfasst, die ein oder mehrere Programme repräsentieren, wobei das eine oder die mehreren Programme Anweisungen umfassen, um bei Ausführung des einen oder der mehreren Programme durch einen Computer, der eine Verarbeitungseinheit umfasst, die funktionsmäßig mit Speichermitteln und einem Ausgangs-/Eingangsschnittstellenmodul verbunden ist, den Computer zu veranlassen, bei Auftreten eines Ereignisses gemäß dem Verfahren nach einem der Ansprüche 1 bis 5 einen Alarm auszugeben.

## Claims

1. Method for alerting of the occurrence of an event, implemented by a device for alerting of the occurrence of an event,
the method comprising:
- reception (102), from a user, of a user query (111) containing a request for subscription to the occurrence of an event;
- interpretation (103) of the user query (111) with the aid of a semantic engine and determination of a request for subscription to the occurrence of an event contained in the query;
- determination (104), as a function of the event, of an events server (153) able to process said request for subscription;
- sending, to the events server (153), of a query for subscription (112) to the monitoring of the occurrence of the event;
- reception (107), from the events server (153), of a first message (113) associated with an occurrence of the event;
- sending (109), to the user, of a second message (114) informing of the occurrence of the event.

2. Method according to Claim 1, in which the second message (114) is a natural-language message.

3. Method according to one of the preceding claims, in which the user query (111) is received via a channel for textual communication.

4. Method according to one of the preceding claims, in which the semantic engine is an engine using artificial intelligence.

5. Method according to one of the preceding claims, in which the determination (104) of the events server comprises:
- the sending of a third message to an interrogation server, the third message comprising the event.
- the reception of a fourth message originating from the interrogation server, the fourth message comprising an item of information relating to the events server.

6. Device (200) for alerting of the occurrence of an event, the device comprising:
- a first interface (203) configured for reception, from a user, of a user query containing a request for subscription to the occurrence of an event;
- a circuit (204) implementing a semantic engine for the interpretation of the user query, the semantic engine being able to determine a request for subscription to the occurrence of an event contained in the query;
- a circuit (204) configured for the determination, as a function of the event, of an events server able to process said request for subscription;
- a second interface (206) configured for the sending, to the events server, of a query for subscription to the monitoring of the occurrence of the event;
- a third interface (203) configured for the reception, from the events server, of a first message associated with an occurrence of the event;
- a fourth interface (206) configured for the sending, to the user, of a second message informing the user of the occurrence of the event.

7. Computer program, loadable into a memory associated with a processor, and comprising code portions for the implementation of a method according to any one of Claims 1 to 5 during the execution of said program by the processor.

8. Data set representing, for example by dint of compression or encoding, a computer program according to Claim 7.

9. Medium for non-transient storage of a program executable by computer, comprising a data set representing one or more programs, said one or more programs comprising instructions for, during the execution of said one or more programs by a computer comprising a processing unit coupled in an operational manner to memory means and to an input/output interface module, causing the computer to alert of the occurrence of an event according to the method of any one of Claims 1 to 5.
